# NEUE EUROPÄISCHE PATENTSCHRIFT

(11) **EP 0 847 959 B2**
(45) Veröffentlichungstag und Bekanntmachung des Hinweises auf die Entscheidung über den Einspruch: **17.10.2007**
(45) Hinweis auf die Patenterteilung: 20.03.2002
(21) Anmeldenummer: 97890215.3
(22) Anmeldetag: 31.10.1997
(51) Int. Cl.: B67C 3/06, A23L 2/54

(54) **Verfahren zur Herstellung und Abfüllung von mit Sauerstoff oder einem Sauerstoff-Gasgemisch angereicherten Flüssigkeiten**
Method for preparing and filling of oxygen-enriched or oxygen containing gas enriched liquids
Procédé de fabrication et de remplissage de liquides enrichis en oxygène ou enrichis d'un mélange de gaz contenant de l'oxygène

(30) Priorität: 19.11.1996 AT 68096 U; 04.09.1997 AT 148197
(43) Veröffentlichungstag der Anmeldung: 17.06.1998
(73) Patentinhaber: Kramer & Co. OEG, 9300 St. Veit (AT)
(72) Erfinder: Köck, Herbert Hans, 9300 St. Veit/Glan (AT); Kramer, Hans Klaus, 9020 Klagenfurt (AT)
(74) Vertreter: Gibler, Ferdinand

(56) Entgegenhaltungen:
- EP-A- 0 314 015
- EP-A- 0 365 867
- EP-A- 0 596 621
- WO-A-95/29130
- WO-A-95/32796
- AT-U- 1 699
- DE-A- 3 940 389
- DE-C- 699 809
- DE-C- 19 529 955
- US-A- 3 832 474
- US-A- 5 006 352

## Beschreibung

Die Erfindung betrifft ein Verfahren zur Herstellung und Abfüllung von mit Sauerstoff oder einem Sauerstoff-Gasgemisch angereicherten Flüssigkeiten, insbesondere Getränken, in Behälter, insbesondere Flaschen, wobei die Flüssigkeit entgast, danach mit Sauerstoff und gegebenenfalls anderen Gasen in gelöster und/oder gebundener Form angereichert und in Behälter abgefüllt wird, woraufhin diese druckdicht verschlossen werden.

Bei bisher bekannten Verfahren dieser Art wird Sauerstoff unter hohem Druck in die vorgekühlte Flüssigkeit eingebracht, wodurch der Sauerstoff in dieser in gelöster Form aufgenommen wird. Es können dabei relativ hohe Werte an Sauerstoffgehalt erzielt werden, dieser geht aber bei Abfüllung der Flüssigkeit in Behälter wieder größtenteils verloren, sodaß kommerzielle Anwendungen zu keinem Erfolg geführt haben. Den mit Sauerstoff angereicherten Getränken ist nämlich nur dann eine medizinisch auch feststellbare Wirkung zuzuschreiben, wenn mehr als ungefähr 80 mg/l Sauerstoff auch tatsächlich in der Flüssigkeit vorliegen, wenn sie vom Konsumenten zu sich genommen wird.

Die EP 0 365 867 A offenbart ein Verfahren und eine Vorrichtung zum Befüllen von Getränkedosen, wobei die Getränkedose zunächst durchgespült und anschließend mit einem Inertgas vorgespannt wird, wobei der Druck geringfügig unter dem eines Abfüllkessels liegt. Nach einem Druckausgleich mit dem Abfüllkessel wird die Dose aus diesem befüllt.

Aus der WO 9 529 130 A geht ein Verfahren hervor, um eine Flüssigkeit mit Sauerstoff anzureichern. Das Wasser wird in einen verschlossenen Anreicherungskessel, welcher einen Sauerstoffdruck von mindestens 1,37 bar aufweist, angereichert. Die Abfüllung des angereicherten Wassers in Behälter wird nicht ausgeführt.

In der EP 0 314 015 A ist ein Verfahren zur Anreicherung von Wasser mit Sauerstoff beschrieben, bei dem Wasser in einem Kreislauf ständig zirkuliert und dabei den Sauerstoff in einer Reaktionskammer in sich aufnimmt. Durch dieses Verfahren ist ein Sauerstoffgehalt von 223 mg/l im geschlossenen Apparat erreichbar.

Die US 5 006 352 A beschreibt ein Verfahren für ein Getränk, welches mit Sauerstoff angereichert ist, wobei der Sauerstoffgehalt zwischen 32 und 35 mg/l beträgt, und welchem Geschmacksverstärker beigesetzt sein können.

Die DE 3 940 389 A offenbart ein flüssiges therapeutisches Mittel, welches mit Sauerstoff angereichert ist, wobei der Sauerstoffgehalt vorzugsweise etwa 50 mg/l beträgt, und Spurenelemente und Mineralien enthalten kann.

Da nun aber der bei der Anreicherung eingestellte Sauerstoffgehalt durch das Abfüllen in Flaschen, Dosen o.ä. gemäß dem Stand der Technik großteils verloren geht, können Getränke dieser Art nur aus direkter Produktion in unverschlossenem Zustand und somit in nur sehr kleinen, nicht gewinnbringenden Mengen vertrieben werden.

Aufgabe der Erfindung ist es daher, ein Verfahren der eingangs genannten Art anzugeben, mit dem der in einer Flüssigkeit gelöste und gebundene Sauerstoff bzw. Sauerstoff-Gasgemisch-Gehalt bei der Abfüllung in Behälter, insbesondere Flaschen und Dosen beibehalten werden kann.

Erfindungsgemäß wird dies dadurch erreicht, daß die mit Sauerstoff bzw. Sauerstoff-Gasgemisch angereicherte Flüssigkeit in einen Gaseinmischungsreaktor, in welchem die angereicherte Flüssigkeit vor dem Abfüllprozeß zwischengespeichert wird, vorzugsweise von oben, laminar einströmen gelassen wird, daß der Flüssigkeitsfüllstand innerhalb des von der angereicherten Flüssigkeit durchströmten Gaseinmischungsreaktors zwischen einem Tiefst- und einem Höchststand, vorzugsweise zwischen 40% und 60%, gehalten wird, wobei bei Erreichen des Tiefststandes die kontinuierliche Zufuhr von Sauerstoff bzw. Sauerstoff-Gasgemisch zur Flüssigkeit vor dem Flüssigkeitseingang des Gaseinmischungsreaktors eingestellt wird und stattdessen in einem Umlaufbetrieb solange Sauerstoff bzw. Sauerstoff-Gasgemisch über einen Gasabführausgang aus dem Gaseinmischungsreaktor abgesaugt und der Flüssigkeit vor dem Flüssigkeitseingang des Gaseinmischungsreaktors zugeführt wird, bis der Höchststand der Flüssigkeit im Gaseinmischungsreaktor wieder erreicht ist, woraufhin der Flüssigkeit vor dem Flüssigkeitseingang des Reaktors wieder kontinuierlich Sauerstoff bzw. Sauerstoff-Gasgemisch zugeführt wird, daß jeder einzelne zu füllende Behälter vor dem Befüllen mit angereicherter Flüssigkeit mit Sauerstoff oder einem Sauerstoff-Gasgemisch gefüllt und dabei unter einem ersten Druck vorgespannt wird, und daß nachfolgend die mit Sauerstoff oder einem Sauerstoff-Gasgemisch angereicherte Flüssigkeit unter einem zweiten, den ersten übersteigenden Druck in den druckdicht abgeschlossenen Behälter bis auf ein aus Sauerstoff bzw. Sauerstoffgemisch bestehendes, im Behälter verbleibendes Restvolumen im Bereich des oberen Behälterrandes gefüllt wird, wobei die Flüssigkeit von der Anreicherung bis zur Abfüllung unter einem gegenüber dem atmosphärischen Druck erhöhten Druck steht, der erst vor dem Verschließen des Behälters ausgeglichen wird.

Dadurch werden Wirbel in der einströmenden Flüssigkeit vermieden, die ein Entweichen des Sauerstoffes oder des Sauerstoff-Gasgemisches aus der Flüssigkeit zur Folge hätten. Die Änderungen im Füllstand sind produktionsbedingt, da es zu manchen Zeitpunkten zu einer größeren oder geringeren Auslastung der Füllanlage kommen kann. Durch die angewandte Zweipunktregelung des Flüssigkeitsstandes wird erreicht, daß bei Absinken desselben auf den Tiefststand es zu einer Überanreicherung mit Sauerstoff bzw. Sauerstoff-Gasgemisch der Flüssigkeit im Reaktor kommt. Durch die Vorfüllung der Behälter mit Sauerstoff bleibt nach dem Abfüllvorgang zwischen dem Flüssigkeitspegel und dem oberen Behälterrand aufgrund der gegenüber Luft höheren Dichte des Sauerstoffes eine Sauerstoffhaube bestehen, die ein vorzeitiges Ausgasen des Sauerstoffes aus der angereicherten Flüssigkeit verhindert. Während des Einfüllvorganges werden die Behälter druckdicht abgeschlossen, wobei der von der Vorabfüllung überschüssig in den Behältern vorhandene Sauerstoff entweichen kann. Nach dem Öffnen des Druckverschlusses entspannt sich die Flüssigkeit, ohne daß dabei aufgrund der Sauerstoffhaube oberhalb des Flüssigkeitspegels nennenswert Sauerstoff entweicht. Wesentlich ist dabei, daß die Flüssigkeit von der Anreicherung bis zur Abfüllung ohne Unterbrechung immer unter einem höheren Druck als dem vorherrschenden Atmosphären-Druck steht, wobei dieser Druck, unter dem die Flüssigkeit steht, sich in den verschiedenen Stufen des Prozesses ändern kann, der Druckunterschied gegenüber der Umgebung aber erst vor dem Verschließen des Behälters ausgeglichen wird. Auf diese Weise kann der während des Anreicherungsvorganges in die Flüssigkeit eingebrachte Sauerstoff während des Abfüllens in der Flüssigkeit gehalten werden. Bei Abfüllen einer mit einem Sauerstoff-Gasgemisch angereicherten Flüssigkeit wird ebenfalls eine Vorabfüllung der Flaschen mit einem Sauerstoff-Gasgemisch vorgenommen, welches nach der Abfüllung eine entsprechende Gashaube bildet. Damit können auch bisher noch nicht realisierte Abfüllungen von Getränken, die eine Mischung aus Kohlendioxid und Sauerstoff enthalten, vorgenommen werden.

Nach einem weiteren Merkmal der Erfindung kann vorgesehen sein, daß der Sauerstoff bzw. das Sauerstoff-Gasgemisch der anzureichernden Flüssigkeit mittels einer Injektordüse, vorzugsweise eines Venturi-Rohrs, unter einem Zerstäubungsdruck beigemischt wird.

Die Injektordüse vergrößert die Oberfläche der anzureichernden Flüssigkeit um ein Vielfaches, sodaß auf diese Weise der Sauerstoff bzw. das Sauerstoff-Gasgemisch in hohen Werten zwischen 80 mg/l und 500 mg/l angereichert werden kann.

Gemäß einem weiteren Ausf-uhrungsbeispiel der Erfindung kann vorgesehen sein, daß vor dem ersten Durchlauf von angereicherter Flüssigkeit der Gaseinmischungsreaktor mit Sauerstoff bzw. Sauerstoff-Gasgemisch, vorzugsweise zu zwei Drittel, gefüllt und unter einem Reaktordruck, der kleiner als der Zerstäubungsdruck ist, vorgespannt wird, und daß danach die angereicherte Flüssigkeit den Gaseinmischungsreaktor durchströmen gelassen wird.

Durch die Zwischenspeicherung der angereicherten Flüssigkeit unter einer Sauerstoff- bzw. einer Sauerstoff-Gasgemisch-Atmosphäre wird die angereicherte Flüssigkeit in ihrem Zustand nach Verlassen der Injektordüse gehalten, wobei der Reaktordruck unter dem Wert des Zerstäubungsdruckes gewählt wird, da der Sauerstoff generell geringe Tendenz zum Ausgasen als etwa Kohlendioxid zeigt. Dennoch ist die Sauerstoff bzw. Gasgemisch-Druckatmosphäre ein wesentlicher Bestandteil jener Maßnahmen, die den Anreicherungsgehalt der Flüssigkeit bis zum Abfüllen konstant hält, sodaß es sonst zu einem deutlich meßbaren Abfall des Sauerstoff bzw. SauerstoS-Gasgemisch-Gchalts in den abgefüllten Flaschen kommen würde.

Durch die ständig sinkende Qualität der Umgebungsluft und anderer Umweltkomponenten ergeben sich bei vielen Menschen und auch Tieren, insbesondere Haustieren, Anzeichen von mangelndem körperlichen Wohlbefinden und schlechter Konzentrationsfähigkeit. Durch die Anreicherung der Luft mit mehr Sauerstoff kann diesem Übel abgeholfen werden, es ist aber in der Regel nicht immer möglich, an allen Orten geeignete Sauerstoffspender zu installieren bzw. diese immer mit sich zu führen.

Die Aufgabe, ein Getränk für den menschlichen sowie tierischen Gebrauch herzustellen, welches das körperliche Befinden sowohl kurz- als auch langfristig hebt und die weitere Aufgabe, das Immunsystem eines menschlichen oder tierischen Organismus zu stärken, können bei einem Getränk, wobei der Getränkeflüssigkeit Sauerstoff in gelöster und/oder gebundener Form mit einer höheren als der natürlich vorhandenen Konzentration beigemischt ist, dadurch erreicht werden, daß der Sauerstoffgehalt im Getränk in einem Bereich von 90 mg/l bis 500 mg/l liegen.

Durch ein solches Getränk kann die Agilität des Menschen oder des Tieres stark angehoben und die Anfälligkeit für Krankheiten von Organen und der Atemwege deutlich reduziert werden. Es kann bei öfterem Trinken des Getränkes eine Stärkung des Immunsystems der betreffenden Person festgestellt werden- Das Getränke kann sowohl nichtalkoholischer als auch alkoholischer Art sein.

Ebenso kann der Sauerstoffgehalt im Getränk in einem Bereich von 100 mg/l bis 300 mg/l liegen. Dadurch wird die Befindlichkeit des Organismus gesteigert und eine höhere Konzentrationsfähigkeit ermöglicht.

Beispielsweise kann der Sauerstoffgehalt im Getränk in einem Bereich von 140 mg/l bis 180 mg/l liegen. In diesem Bereich ist die Aufnahmefähigkeit des Organismus für den Sauerstoff besonders hoch und bei einer solchen Konzentration kann der Sauerstoffgehalt des Blutes besonders effizient erhöht werden.

Weiters kann auch zur Verbesserung des Geschmackes, der Trinkbarkeit und der Sauerstoff-Mischbarkeit des Getränkes der Getränkeflüssigkeit Kohlendioxid oder andere Gase und/oder chemische Substanzen, z.B. pH-Wert senkende Mittel bzw. Geschmacksmittel beigemischt sein.

Zur besseren Aufnahme des im Getränk enthaltenen Sauerstoffes durch den Organismus können der Getränkeflüssigkeit Mineralien oder Vitamine beigemischt sein.

Die Erfindung wird nachfolgend anhand dem in den Zeichnungen dargestellten Ausführungsbeispiel eingehend erläutert. Es zeigt dabei
Fig.1 ein Blockschaltbild einer Ausführungsform einer Anlage zur Durchführung des erfindungsgemäßen Verfahrens und
Fig.2 einen Querschnitt durch einen Flaschenhals nach der Abfüllung.

Mit der in Fig.1 dargestellten Anlage ist ein Verfahren zur Herstellung und Abfüllung von mit Sauerstoff oder einem Sauerstoff-Gasgemisch angereicherten Flüssigkeiten, insbesondere Getränken, in Behälter 30 für den Massenkonsum, wie Flaschen, Dosen o.ä., durchführbar, bei dem die Flüssigkeit entgast, danach mit Sauerstoff angereichert und in Behälter abgefüllt wird.

Eine Druckförderpumpe 3 fördert eine vorbestimmbare Menge an Flüssigkeit aus einem Vakuumreaktor 2, der über einen Einlauf 20 ständig mit Flüssigkeit versorgt wird, in einen ersten Mischeinlauf 21 einer Injektor-Düse 4. Die Flüssigkeit muß keiner Kühlung unterworfen werden, was sich gegenüber dem Stand der Technik besonders vorteilhaft auf die Energiekosten auswirkt (z.B. Quelltemperatur 8-20°C).

Als Flüssigkeit wird in diesem Ausführungsbeispiel Wasser mit Sauerstoff oder einem Sauerstoff-Gasgemisch versetzt, es kann aber jede andere als Getränk geeignete Flüssigkeit, z.B. Fruchtsaft, Wein, Spirituosen, Milch, Yoghurt u.s.w. dem erfindungsgemäßen Verfahren unterworfen werden. Über eine Vakuumpumpe 1 wird ein sehr niedriger Druck p₁ im Gasvolumen des Vakuumreaktors 2 eingestellt, wodurch das in den Vakuumreaktor 1 einströmende Wasser ausgast, und somit - atomar betrachtet -innerhalb der Flüssigkeit Platz für den in die Flüssigkeit einzulagernden Sauerstoff geschaffen wird. So weist gewöhnliches Quellwasser abhängig von der Jahreszeit und damit den Umwelteinflüssen und den durchsickerten Gesteinsschichten unterschiedliche Gaskonzentrationen bzw. -anteile auf, die vor dem Zusetzen des Sauerstoffes zum Wasser beseitigt werden müssen. Nach der Entgasung gelangt das Wasser in die Druckförderpumpe 3, die es unter einem Druck zwischen 5 und 10 bar in den ersten Mischeinlauf 21 der Injektor-Düse 4 pumpt, die beispielsweise durch ein Venturi-Rohr gebildet sein kann, und deren Auslauf 22 mit dem Flüssigkeitseingang eines Gaseinmischungsreaktors 6 verbunden ist.

Über einen zweiten Mischeinlauf 23 wird aus Gasdruckbehältern 16 und 17 entweder reiner Sauerstoff oder ein Sauerstoff-Gasgemisch der Injektor-Düse 4 unter einem Zerstäubungsdruck p₂ zugeleitet. Im Druckbehälter 17 befindet sich im gezeigten Ausführungsbeispiel der Sauerstoff und im Druckbehälter 16 Kohlendioxid, welche Behälter 16 und 17 über zugehörige Mengenregler 13 bzw. 14 in eine gemeinsame Zuleitung 24 münden, die einerseits über den zweiten Mischeinlauf 23 mit der Injektor-Düse 4 und über ein Reaktorfüllventil 18 mit einem Gas-Fülleingang des Gaseinmischungsreaktors 6 verbunden ist.

Über die Mengenregler 13, 14 kann der gewünschte Gehalt an Sauerstoff bzw. Sauerstoff-Gasgemisch eingestellt werden, mit dem die Flüssigkeit angereichert werden soll. Je nach der gewählten Durchflußmenge an Flüssigkeit wird der entsprechende Sauerstoff- bzw. Gasgemischmassendurchfluß, der in die Injektor-Düse 4 einströmt, eingestellt.

Über den Gas-Fülleingang wird der Gaseinmischungsreaktor 6 vor dem ersten Durchlauf von Flüssigkeit zu ungefähr zwei Drittel mit Sauerstoff bzw. mit Sauerstoff-Gasgemisch gefüllt. Nach diesem Füllvorgang kann mit dem permanenten Durchströmen der mit Sauerstoff bzw. Sauerstoff-Gasgemisch versetzten Flüssigkeit über den Auslauf 22 der Injektor-Düse 4 begonnen werden, wobei der Flüssigkeitsfüllstand des Gaseinmischungsreaktors 6 zwischen einem Tiefst- und einem Höchststand, vorzugsweise zwischen 40% bzw. 60%, gehalten wird, wodurch eine ausreichende Pufferwirkung für das nachfolgende Abfüllen in die Flaschen ermöglicht wird.

Bei Erreichen des Tiefststandes wird die kontinuierliche Zufuhr von Sauerstoff bzw. Sauerstoff-Gasgemisch zur Flüssigkeit vor dem Flüssigkeitseingang des Gaseinmischungsreaktors 6 eingestellt und stattdessen in einem Umlaufbetrieb über ein Gas-Kreislaufventil 5 solange Sauerstoff bzw. Sauerstoff-Gasgemisch über einen Gasabführausgang aus dem Gaseinmischungsreaktor 6 abgesaugt und der Flüssigkeit vor dem Flüssigkeitseingang des Gaseinmischungsreaktors 6 zugeführt, bis der Höchststand der Flüssigkeit im Gaseinmischungsreaktor 6 wieder erreicht ist, woraufhin der Flüssigkeit vor dem Flüssigkeitseingang des Reaktors 6 wieder kontinuierlich Sauerstoff bzw. Sauerstoff-Gasgemisch zugeführt wird.

Die durch die in den Gaseinmischungsreaktor 6 einströmende Flüssigkeit entstehende Komprimierung des im Reaktor 6 befindlichen Sauerstoffes bedingt eine Druckerhöhung in diesem, wodurch sich ein Druck p₃ ungefähr zwischen 5 bis 10 bar ausbildet, der durch ein dem Reaktorausgang nachgeschaltetes Reaktorgegendruckventil 8 aufrecht erhalten wird. Der zum Anreichern angewandte Zerstäubungsdruck p₂ ist höher als der im Gaseinmischungsreaktor sich ausbildende Druck p₃.

Die Injektor-Düse 4 erhöht die Oberfläche der einströmenden, entgasten Flüssigkeit, wodurch der zugeführte Sauerstoff bzw. das zugeführte Sauerstoff-Gasgemisch sehr viel leichter in die Flüssigkeit als im unveränderten Zustand eingebaut werden kann. Aufgrund dieses Umstandes gelingt es auch sehr viel höhere Mengen an Sauerstoff in der Flüssigkeit zu lösen oder zu binden, als es aus dem Stand der Technik bekannt geworden ist.

Eine Maßnahme, den sehr hohen Sauerstoffgehalt in der angereicherten Flüssigkeit zu halten, besteht darin, diese nach dem Zumischen von Sauerstoff bzw. Sauerstoff-Gasgemisch über den Flüssigkeitseingang laminar in den Gaseinmischungsreaktor 6 einströmen zu lassen. Auf diese Weise gelangt die Flüssigkeit völlig beruhigt, also ohne weitere Verwirbelungen in den Reaktor 6 und verliert dadurch nicht an Sauerstoff- bzw. Sauerstoff-Gasgemisch-Bestandteilen. Durch die Sauerstoff- bzw. Sauerstoff-Gasgemisch-Vorfüllung wird ebenfalls ein vorzeitiges Austreten des Sauerstoffes bzw. des Sauerstoff-Gasgemisches verhindert. Nach dem Gegendruckventil 8 wird die angereicherte Flüssigkeit mittels einer Förderpumpe 9 in einen Vorratstank 10 für eine nachfolgende Flaschenfüllmaschine 12 gepumpt und dort ein Druck p₄ (z.B. 5 bis 10 bar) erzeugt, welcher kleiner oder gleich dem Druck p₃ des Gaseinmischungsreaktors 6 zu sein hat. Aus dem Vorratstank 10 wird das angereicherte Wasser über eine Druckabfüllpumpe 11 einer Flaschenfüllmaschine 12 unter einem zweiten Druck p₅ (z.B. 3,5 bar) zugeführt, der wiederum kleiner oder gleich dem Druck p₄ ist.

Erfindungsgemäß wird jede einzelne, zu füllende Flasche 30 vor dem Befüllvorgang über einen Mengenregler 15 aus dem Sauerstoff-Tank 17 mit Sauerstoff gefüllt und dabei unter einem ersten Druck p6 (z.B. 3 bar) vorgespannt. Nachfolgend wird die mit Sauerstoff angereicherte Flüssigkeit unter dem zweiten, den ersten übersteigenden Druck p₅ in die druckdicht abgeschlossenen Flaschen 30 bis auf ein aus Sauerstoff bzw. Sauerstoffgemisch bestehendes, in der Flasche 30 verbleibendes Restvolumen 41 (Fig.2) im Bereich des oberen Behälterrandes 40 gefüllt, wobei die Flüssigkeit von der Anreicherung bis zur Abfüllung unter einem gegenüber dem atmosphärischen Druck erhöhten Druck steht, der erst vor dem Verschließen der Flasche 30 ausgeglichen wird.

Die Flaschen 30 werden während der Vorabfüllung mit Sauerstoff oder einem Sauerstoff-Gasgemisch über einen geeigneten Füllverschluß unter dem Druck p₆ gehalten. Über einen dafür vorgesehenen Fülleinlaß tritt die angereicherte Flüssigkeit unter dem höheren Druck p₅ in das Flascheninnere ein und verdrängt den darin befindlichen Sauerstoff bis auf ein Restvolumen 41 im Flaschenhals 40 (Fig.2), das nun mit einer Sauerstoffhaube unter dem Druck p₅ gefüllt ist. Das überschüssige Sauerstoffvolumen der Vorabfüllung kann über ein geeignetes Überdruckventil entweichen. Danach werden die Flaschen dem Atmosphärendruck ausgesetzt, in dem der Druckverschluß automatisch abgenommen wird. Die Flüssigkeit 42 (Fig.2) entspannt sich, ohne daß dabei ein nennenswerter Sauerstoffgehalt aus dieser entweicht. Danach können die Flaschen 30 einer automatischen Verschließeinrichtung zugeführt werden, in der beispielsweise Kronenkorken aufgesetzt werden.

Auf diese Weise kann ein Sauerstoff- bzw. ein Sauerstoff-Gasgemisch-Gehalt in den abgefüllten Behältern erzielt werden, der zwischen 80 mg/l und 500 mg/l liegt, und der auch nach Transport und Lagerung der Flaschen nachweisbar ist. Damit können verschiedenste Getränke auf wirkungsvolle Weise mit Sauerstoff angereichert werden.

Der sehr hohe Sauerstoffanteil im Getränk kann auf vielfältige Weise zu prophylaktischen und therapeutischen Zwecken in der Heilkunde aber auch zur alltäglichen Steigerung der Leistungsfähigkeit bei erschöpftem oder belastetem Organismus angewandt werden. Weiters ist festgestellt worden, daß der erreichbare hohe Sauerstoffgehalt die Sterilisierung von Getränken unnötig macht, sodaß Keime oder Bakterien die zu Fäulnis oder Gärung führen können, ohne Hitzebehandlung abgetötet werden. Der Geschmack und der Vitamingehalt, beispielsweise von Obstsäften, können auf diese Weise weitaus besser erhalten werden. Generell erzeugt die erfrischende Wirkung des hohen Sauerstoffgehalts ein gesteigertes Wohlbefinden.

Wird das Wasser bzw. die Flüssigkeit mit einem Sauerstoff-Gasgemisch angereichert, so kann eine Vorabfüllung der Flaschen mit dem entsprechenden Sauerstoff-Gasgemisch vorgenommen werden, das nach dem Einfüllen der Flüssigkeit in die Flaschen ebenfalls eine Haube bildet, die ein Abgasen des Sauerstoff-Gasgemisches verhindert. Dieser konkrete Vorabfüllvorgang ist im Schema gemäß Fig.1 nicht realisiert. Durch den beschriebenen Vorgang ist es möglich, ein mit Kohlendioxid und Sauerstoff angereichertes Getränk herzustellen, das bei einem sehr hohen Sauerstoffgehalt abfüllbar ist.

Einem mit Kohlendioxid versetzten Mineralwasser ist gemäß einem besonders bevorzugten Ausführungsbeispiel der Erfindung vorzugsweise unter Druck Sauerstoff beigemischt, wobei der Anteil des Sauerstoffes 180 mg/l +- 10mg/l beträgt. Der Sauerstoff kann im erfindungsgemäßen Getränk gelöst und/oder gebunden vorliegen, jedenfalls ist der Sauerstoff in einer höheren als der natürlichen Konzentration im Getränk vorhanden. Es können dem erfindungsgemäßen Getränk aber zusätzlich zum Kohlendioxid oder auch ohne diesem chemische Substanzen, z.B. pH-Wert senkende Mittel bzw. Geschmacksmittel beigemischt sein. Unter druckfestem Verschluß bleibt diese Sauerstoffkonzentration erhalten. So kann das erfindungsgemäße Getränk in einer handelsüblichen Verpackung, wie z.B. Tetra-Pack, Metallblech-Getränkedose, Flasche o.ä. abgefüllt sein, aus der es jederzeit und an allen möglichen Orten leicht entnommen werden kann. Es besteht aber z.B. auch die Möglichkeit, sauerstoffangereichertes Wasser unverschlossen aufzubewahren, nur muß es dann entsprechend rasch verbraucht oder kühl, wie z.B. bei Kühlschranktemperatur gelagert werden. Die Konzentration an Sauerstoff ist in dem Bereich von 140 bis 180 mg/l besonders befindlichkeitssteigernd und wirkt bei Einnehmen über einen längeren Zeitraum, z.B. zwei oder drei Wochen, dreimal täglich besonders anregend und stärkend für das körperliche Immunsystem von Menschen als auch von Tieren. Einem Bereich von 100 bis 300 mg/l Sauerstoffgehalt im Getränk kann gemäß den durchgeführten Untersuchungen ebenfalls ein positiver Stärkungseffekt für den Organismus zugeschrieben werden. Die erfindungsgemäße Sauerstoffanreicherung kann bei jeglicher Art von Limonaden, sonstigen Erfrischungsgetränken, auch Cola- und sogenannten Aufputschgetränken aber auch alkoholischen Getränken wie Bier oder Wein angewandt werden. Der weiteste erfindungsgemäß wirksame Bereich ist mit 90 bis 500 mg/l Sauerstoff festgestellt worden. Durch Zumischung von Mineralien und Vitaminen zur erfindungsgemäßen Getränkeflüssigkeit läßt sich die Aufnahmefähigkeit des Organismus für den im Getränk gelösten und/oder gebundenen Sauerstoff noch erhöhen.

## Patentansprüche

1. Verfahren zur Herstellung und Abfüllung von mit Sauerstoff oder einem Sauerstoff-Gasgemisch angereicherten Flüssigkeiten, insbesondere Getränken, in Behälter, insbesondere Flaschen, wobei die Flüssigkeit entgast, danach mit Sauerstoff und gegebenenfalls anderen Gasen in gelöster und/oder gebundener Form angereichert und in Behälter abgefüllt wird, woraufhin diese druckdicht verschlossen werden, **dadurch gekennzeichnet, daß** die mit Sauerstoff bzw. Sauerstoff-Gasgemisch angereicherte Flüssigkeit in einen Gaseinmischungsreaktor, in welchem die angereicherte Flüssigkeit vor dem Abfüllprozeß zwischengespeichert wird, vorzugsweise von oben, laminar einströmen gelassen wird, daß der Flüssigkeitsfüllstand innerhalb des von der angereicherten Flüssigkeit durchströmten Gaseinmischungsreaktors zwischen einem Tiefst- und einem Höchststand, vorzugsweise zwischen 40% und 60%, gehalten wird, wobei bei Erreichen des Tiefststandes die kontinuierliche Zufuhr von Sauerstoff bzw. Sauerstoff-Gasgemisch zur Flüssigkeit vor dem Flüssigkeitseingang des Gaseinmischungsreaktors eingestellt wird und stattdessen in einem Umlaufbetrieb solange Sauerstoff bzw. Sauerstoff-Gasgemisch über einen Gasabführausgang aus dem Gaseinmischungsreaktor abgesaugt und der Flüssigkeit vor dem Flüssigkeitseingang des Gaseinmischungsreaktors zugeführt wird, bis der Höchststand der Flüssigkeit im Gaseinmischungsreaktor wieder erreicht ist, woraufhin der Flüssigkeit vor dem Flüssigkeitseingang des Reaktors wieder kontinuierlich Sauerstoff bzw. Sauerstoff-Gasgemisch zugeführt wird, daß jeder einzelne zu füllende Behälter vor dem Befüllen mit angereicherter Flüssigkeit mit Sauerstoff oder einem Sauerstoff-Gasgemisch gefüllt und dabei unter einem ersten Druck vorgespannt wird, und daß nachfolgend die mit Sauerstoff oder einem Sauerstoff Gasgemisch angereicherte Flüssigkeit unter einem zweiten, den ersten übersteigenden Druck in den druckdicht abgeschlossenen Behälter bis auf ein aus Sauerstoff bzw. Sauerstoffgemisch bestehendes, im Behälter verbleibendes Restvolumen im Bereich des oberen Behälterrandes gefüllt wird, wobei die Flüssigkeit von der Anreicherung bis zur Abfüllung unter einem gegenüber dem atmosphärischen Druck erhöhten Druck steht, der erst vor dem Verschließen des Behälters ausgeglichen wird.

2. Verfahren nach Anspruch 1, **dadurch gekennzeichnet, daß** der Sauerstoff bzw. das Sauerstoff-Gasgemisch der anzureichernden Flüssigkeit mittels einer Injektordüse, vorzugsweise eines Venturi-Rohrs, unter einem Zerstäubungsdruck beigemischt wird.

3. Verfahren nach Anspruch 1 und 2, **dadurch gekennzeichnet, daß** vor dem ersten Durchlauf von angereicherter Flüssigkeit der Gaseinmischungsreaktor mit Sauerstoff bzw. Sauerstoff-Gasgemisch, vorzugsweise zu zwei Drittel, gefüllt und unter einem Reaktordruck, der kleiner als der Zerstäubungsdruck ist, vorgespannt wird, und daß danach die angereicherte Flüssigkeit den Gaseinmischungsreaktor durchströmen gelassen wird.

## Claims

1. A method for the preparation and filling of liquids enriched with oxygen or a gaseous oxygen mixture, especially beverages, into containers, especially bottles, with the liquid being degassed, then enriched with oxygen and optionally other gases in dissolved and/or bonded form and then being filled into containers, whereupon the same are sealed in a pressure-tight manner, **characterized in that** the liquid enriched with oxygen or a gaseous oxygen mixture is allowed to flow in a laminar manner, preferably from above, into a gas mixture reactor in which the enriched liquid is intermediately stored prior to the filling process, that the filling level of the liquid within the gas mixture reactor which is flowed through by the enriched liquid is held between a lowest and a highest level, preferably between 40% and 60%, with the continuous supply of oxygen or a gaseous oxygen mixture to the liquid being ceased before the liquid input to the gas mixture reactor upon reaching the lowest level and instead oxygen or a gaseous oxygen mixture being removed via a gas discharge outlet from the gas mixture reactor in a circulatory operation and the liquid being supplied before the entrance of liquid of the gas mixture reactor until the highest level of the liquid in the gas mixture reactor has been reached again, whereupon the liquid is continuously supplied with oxygen or a gaseous oxygen mixture before the liquid input of the reactor again, that each individual container to be filled is filled with oxygen or a gaseous oxygen mixture prior to filling with enriched liquid and is prestressed thereby under a first pressure, and that subsequently the liquid enriched with oxygen or a gaseous oxygen mixture is filled under a second pressure exceeding the first pressure into the tightly sealed container up to a residual volume in the region of the upper edge of the container, which residual volume consists of oxygen or a gaseous oxygen mixture and remains in the container, with the liquid being under a pressure increased over the atmospheric pressure from enriching up to filling, which pressure is only equalized prior to the sealing of the container.

2. A method according to claim 1, **characterized in that** the oxygen or gaseous oxygen mixture of the liquid to be enriched is admixed by means of an injector nozzle, preferably a Venturi tube, under an atomizing pressure.

3. A method according to claim 1 and 2, **characterized in that** prior to the first run of enriched liquid the gas mixture reactor is filled with oxygen or the gaseous oxygen mixture, preferably to two-thirds, and is prestressed under a reactor pressure which is smaller than the atomizing pressure, and that thereafter the enriched liquid is allowed to flow through the gas mixture reactor.

## Revendications

1. Procédé de fabrication et de conditionnement de liquides enrichis en oxygène ou en un mélange oxygéné, en particulier de boissons, dans des récipients, en particulier des bouteilles, dans lequel le liquide est dégazé puis enrichi en oxygène et éventuellement en d'autres gaz sous forme dissoute et/ou liée, et conditionné dans des récipients, après quoi ceux-ci sont fermés de manière étanche à la pression, **caractérisé en ce que** l'on fait entrer le liquide enrichi en oxygène ou en mélange gazeux oxygéné en écoulement laminaire, de préférence par le haut, dans un réacteur d'ajout de gaz, dans lequel le liquide enrichi est entreposé avant le conditionnement, **en ce que** le niveau de remplissage de liquide à l'intérieur du réacteur d'ajout de gaz parcouru par le liquide enrichi est maintenu entre un niveau minimum et un niveau maximum, de préférence entre 40 % et 60 %, l'apport continu au liquide d'oxygène ou de mélange gazeux oxygéné étant coupé, lorsque le niveau minimum est atteint, avant l'entrée de liquide du réacteur de mélange gazeux et de l'oxygène ou du mélange gazeux oxygéné étant aspiré au lieu de cela hors du réacteur de mélange de gaz en circulation par une sortie d'évacuation de gaz jusqu'à ce que le niveau maximal de liquide dans le réacteur de mélange de gaz soit rétabli, après quoi de l'oxygène ou du mélange gazeux oxygéné est à nouveau amené en continu dans le liquide avant l'entrée de liquide du réacteur, **en ce que** chaque récipient à remplir est rempli d'oxygène ou de mélange gazeux oxygéné avant d'être rempli de liquide enrichi et précontraint alors sous une première pression, et **en ce que** le liquide enrichi en oxygène ou en mélange gazeux oxygéné est ensuite introduit sous une deuxième pression, dépassant la première, dans le récipient fermé de manière étanche au gaz jusqu'à un volume résiduel composé d'oxygène ou de mélange oxygéné restant dans le récipient au niveau du bord supérieur du récipient, le liquide se trouvant, de l'enrichissement au remplissage, sous une pression augmentée par rapport à la pression atmosphérique, qui n'est équilibrée qu'avant la fermeture du récipient.

2. Procédé selon la revendication 1, **caractérisé en ce que** l'oxygène ou le mélange gazeux oxygéné du liquide à enrichir est ajouté au moyen d'une buse d'injection, de préférence d'un venturi, sous une pression de pulvérisation.

3. Procédé selon les revendications 1 et 2, **caractérisé en ce qu'**avant le premier passage du liquide enrichi, le réacteur de mélange de gaz est rempli avec de l'oxygène ou du mélange gazeux oxygéné, de préférence aux deux tiers, et précontraint sous une pression de réacteur plus basse que la pression de pulvérisation, et **en ce que** l'on fait ensuite passer le liquide enrichi dans le réacteur de mélange de gaz.
